# EUROPÄISCHE PATENTANMELDUNG

(11) **EP 2 330 717 A2**
(43) Veröffentlichungstag der Anmeldung: **08.06.2011**
(21) Anmeldenummer: 10014607.5
(22) Anmeldetag: 15.11.2010
(51) Int. Cl.: H02K 3/28

(54) **Wicklung für einen Rotor oder einen Stator einer elektrische Maschine und Verfahren zur Herstellung einer solchen Wirkung**

(30) Priorität: 02.12.2009 DE 102009056676
(71) Anmelder: Volkswagen Aktiengesellschaft, 38436 Wolfsburg (DE)
(72) Erfinder: Stöhr, Gerd, 34323 Malsfeld (DE)

(57) **Zusammenfassung**

Die Erfindung betrifft eine für eine elektrische Maschine bestimmte, aus einem Wickeldraht (4) durch eine Vielzahl von Windungen hergestellte Wicklung (3). Zum Bewickeln sind die Wicklungsträger (1) nebeneinander in einer Reihe angeordnet, so dass die Wicklungen (3) in einfacher Weise durch eine Vielzahl von Windungen eines Wickeldrahts (4) hergestellt werden können. Der Wickeldraht (4) besteht dabei seinerseits aus einem Leiterbündel einer Vielzahl von Einzeldrähten mit einem Leitungsdurchmesser, die zu einem Polygonaldraht gepresst sind. Zur Herstellung des Rotors oder des Stators werden die so bewickelten Wicklungsträger (1) lediglich in eine geschlossene Ringform gebracht und beispielsweise durch ein thermisches Schrumpfverfahren in ein Gehäuse eingebracht. Hierdurch wird der Herstellungsprozess durch die nebeneinanderliegende Anordnung der Wicklungsträger (1) und die Prozesssteuerung vereinfacht sowie zugleich der Nutfüllfaktor durch die wesentlich verbesserte Zugänglichkeit optimiert.

## Beschreibung

Die Erfindung betrifft eine für eine elektrische Maschine bestimmte, aus einem Wickeldraht durch eine Vielzahl von Windungen hergestellte Wicklung, deren Wickeldraht durch ein Leiterbündel aus Einzeldrähten gebildet ist, die jeweils gegeneinander isoliert und zu einem Polygonaldraht, insbesondere Rechteckdraht gepresst sind. Weiterhin betrifft die Erfindung ein Verfahren zur Herstellung einer Wicklung für einen Rotor oder einen Stator einer elektrischen Maschine, die durch eine Vielzahl von Windungen eines Wickeldrahts hergestellt wird, wobei der Wickeldraht aus einem Leiterbündel aus einer Vielzahl von Einzeldrähten besteht, die gegeneinander isoliert und zu einem Rechteckdraht gepresst werden.

Bei derartigen elektrischen Maschinen stellt die Leistungsdichte zunehmend das für die Praxis entscheidende Kriterium dar. Dies gilt beispielsweise für Hybrid-, Brennstoffzellen- bzw. E-Antriebe in einem Kraftfahrzeug, da hier besonders hohe Ansprüche hinsichtlich eines möglichst reduzierten Gewichts und Volumens des Elektromotors herrschen.

Die Windungen der Wicklungen von elektrischen Maschinen bestehen aus Leitern, beispielsweise aus Kupfer, welche in der Regel zumindest teilweise in Nuten eines Stator- oder Rotorblechpakets untergebracht sind. Um bei einer elektrischen Maschine eine möglichst hohe Leistungsdichte und somit einen hohen Wirkungsgrad zu erzielen, ist es unter anderem sinnvoll, den ohmschen Widerstand in der Stator- und/oder Rotorwicklung zu minimieren.

Eine hierfür geeignete Maßnahme besteht darin, einen möglichst hohen Leiterquerschnitt als Wicklung beispielsweise in Nuten des Statorpakets unterzubringen und somit einen möglichst hohen sogenannten Nutfüllfaktor zu erreichen. Unter dem Nutfüllfaktor versteht man das Verhältnis des blanken Wicklungsquerschnitts in einer Nut zum blanken Nutquerschnitt. Ein hoher Nutfüllfaktor führt neben der Tatsache, dass in der Regel die ohmschen Verluste der Wicklung minimiert werden, auch dazu, dass die Möglichkeiten zur Kühlung der Wicklung sowie des Stator- bzw. Rotorpakets verbessert werden, da der Querschnitt der Wicklung mit zunehmendem Nutfüllfaktor dem Querschnitt der Nut angenähert wird und sich dann die entstehende Wärme besser abführen lässt.

Außerdem lässt sich so eine besonders kompakte Bauweise des Rotors bzw. des Stators realisieren. Bei einer Erhöhung des Nutfüllfaktors ist jedoch gleichzeitig zu beachten, dass der Querschnitt des einzelnen Wicklungsdrahts bestimmte Ausmaße nicht überschreiten darf, um die Ausbildung von Wirbelströmen oder ― im Falle von Wechselstrommaschinen ― die Auswirkungen des Skin-Effekts, welche jeweils zu beträchtlichen Leistungsverlusten führen können, zu begrenzen. Insbesondere Wirbelströme können neben einer Reduzierung des Wirkungsgrads der elektrischen Maschine auch zu zusätzlicher Wärmeentwicklung führen, welche dann wiederum durch Kühlung kompensiert werden muss. Aus diesem Grunde ist es bekannt, als Wicklungsdraht einen aus isolierten Einzeldrähten bestehenden Leiterverbund ― einen sogenannten Litzedraht ― zu verwenden, wobei die Isolierung der Einzeldrähte dann eine ausreichende Spannungsfestigkeit aufweist, um Wirbelstromverluste zu verringern. Des Weiteren ist es üblich, bei mehrlagigen Wicklungen aus einem oder mehreren Leiterverbünden, die einzelnen Lagen und/oder Leiterverbünde gegeneinander zu isolieren. Hierfür werden in der Regel eine Leiterisolation um jeden Leiterverbund sowie eine Lagenisolation zwischen die verschiedenen Lagen des Leiterverbunds bzw. der Leiterverbünde eingebracht. Außerdem muss die Wicklung gegenüber dem Stator- und/oder Rotorpaket isoliert werden, was im Falle einer vorhandenen Nut in der Regel durch Einbringung einer zusätzlichen Nutisolation erfolgt.

Aus der gattungsgemäßen DE 103 13 148 A1 ist auch bereits eine Wicklung für eine elektrische Maschine, umfassend ein Leiterbündel aus eckigen Einzeldrähten bekannt, die jeweils gegeneinander isoliert sind. Indem die eckigen Einzeldrähte des Leiterbündels durch verformte Rundleiter gebildet werden, wird ein geringer ohmscher Verlust bei niedrigen Wirbelstromverlusten gewährleistet, wobei gleichzeitig eine vollständige Kantenisolierung sichergestellt ist. Weiterhin erlaubt dies eine einfache Anpassung an die vorgegebenen Abmessungen der Nuten. Dabei wird ausgenutzt, dass die Dehnbarkeit der Isolierung bekannter Rundleiter bis zu 30 % kein Problem darstellt. Dies ermöglicht eine ausreichende Verformung, ohne die Isolierung zu beschädigen.

Die Verwendung eines einzelnen Leiters mit rechteckigem Querschnitt ist beispielsweise aus der DE 31 24 098 A1 bekannt, in der ein Rechteckleiter zur Herstellung einer gekrümmten Feldspule verwendet wird. Die Verwendung eines eckigen Querschnitts in Rechteck- oder Trapezform hat den Vorteil, dass der Platz in den Nuten optimal ausgenutzt wird. Dadurch wird in den Nuten ein möglichst großer Kupferdrahtquerschnitt untergebracht, wodurch der ohmsche Widerstand der Wicklung minimiert und der Wirkungsgrad der elektrischen Maschine erhöht wird.

Die DE 199 05 747 A1 zeigt darüber hinaus ein Verfahren zur Herstellung eines isolierten rechteckigen Drahts, bei dem ein isolierter Draht mit rundem Querschnitt mit Hilfe von Walzen in einen rechteckigen Querschnitt gepresst wird. Da ein Draht mit einer hinreichend elastischen Isolierung verwendet wird, die sich beim Pressen der Rechteckform anpasst, treten am gepressten Leiter auch keine Probleme an der Kantenisolierung auf. Ein Nachteil dieses Verfahrens liegt darin, dass bei Verwendung eines Drahts mit einem großen Querschnitt, der den ohmschen Widerstand verringert, Wirbelströme auftreten.

Das Problem der Wirbelströme wird in der WO 95/30991 dadurch vermieden, dass Bündel lackierter Flachleiter verwendet werden.

Ferner beschreibt die GB 2 202 170 A einen Drehstromgenerator, insbesondere einen Ständer, der zur Verwendung in einem Kraftfahrzeug-Drehstromgenerator geeignet ist. Dabei ist ein Teil der in die Nuten des Ständers eingelegten Wicklung so geformt, dass die in die Nuten eingesetzten Wicklungsteile im Wesentlichen eine Viereckquerschnittsform durch die Anwendung von Druck erhalten, so dass der Nutfüllfaktor der Wicklung in den Nuten erheblich verbessert wird. Die Wicklung besteht aus Wicklungsmaterial, das wenigstens eine kreisförmige Querschnittsform aufweist.

Die DE 10 2004 037 866 A1 bezieht sich auf Maßnahmen zur Verbesserung des Raumfaktors beim Wickeln eines rechteckigen Drahts auf einen Isolationsspulenkörper durch Reduzierung der Wicklungsfehler.

Die DE 10 2004 025 105 A1 bezieht sich auf einen Stator zur Verwendung in rotierenden elektrischen Maschinen, wie beispielsweise Elektromotoren und Generatoren, auf einen isolierenden Spulenkörper für den Stator sowie auf ein Herstellungsverfahren für den Stator. Die Wicklungen werden aus einem Rechteckdraht gefertigt, der einen im Wesentlichen rechteckigen Querschnitt aufweist, um den Raumfaktor zu verbessern.

Die Erhöhung des Nutfüllfaktors zur Verbesserung des Wirkungsgrads und der Leistungsdichte einer elektrischen Maschine stellt ein Problem dar, welches bislang von den üblichen aus dem Stand der Technik bekannten Verfahren und Vorrichtungen noch nicht befriedigend gelöst wird.

Aus der WO 2004/042893 A1 ist ferner auch bereits ein Verfahren zum Bewickeln einer Polkette bekannt, bei dem die einzelnen Wicklungsträger entgegen ihrer späteren Ringform mittels einer Rolle in eine exponierte Position gebracht werden. Auf diese Weise wird eine optimale Zugänglichkeit der Polkette, deren einzelne Wicklungsträger durch ein Gelenk miteinander verbunden sind, erreicht:

Schließlich wird im Dokument DE 36 17 017 A1 ein Stator für eine elektrische Maschine offenbart. Eine Erregerwicklung wird aus einer Hauptschlusswicklung und einer Nebenschlusswicklung samt einem Wicklungsträger zusammengesetzt. Der Wicklungsträger ist aus einem flachem, biegsamen, wärmebeständigen und isolierendem Bandmaterial geschnitten, geprägt und gefaltet. Die zusammengesetzte Erregerwicklung wird in das Polgehäuse des Stators geschoben und dort auf zugeordneten Polen aufgenommen, die an die Innenwand des Polgehäuses geschraubt sind.

Der Erfindung liegt die Aufgabe zugrunde, eine wesentlich einfacher herzustellende Wicklung zum Bewickeln von Wicklungsträgern mit einem Wickeldraht zu schaffen. Insbesondere soll ein wesentlich flexibleres Herstellungsverfahren geschaffen werden.

Diese Aufgabe wird erfindungsgemäß durch ein Verfahren gemäß den Merkmalen des unabhängigen Anspruchs 1 gelöst. Weitere Ausgestaltungen der Erfindung sind den abhängigen Ansprüchen zu entnehmen.

Die erfindungsgemäße Wicklung für einen Rotor oder einen Stator einer elektrischen Maschine umfasst eine Vielzahl von Windungen eines Wickeldrahts, der durch ein Leiterbündel aus Einzeldrähten gebildet ist, die jeweils gegeneinander isoliert und zu einem Polygonaldraht gepresst sind. Die Wicklungen sind an einzelnen, voneinander unabhängigen oder zueinander beweglichen Wicklungsträgern angeordnet.

Erfindungsgemäß wird eine Wicklung bereitgestellt, deren Wickeldraht ein Leiterbündel aus Einzeldrähten ist, die jeweils gegeneinander isoliert und zu einem Rechteckdraht gepresst sind, wobei die Wicklungen an einzelnen, voneinander unabhängigen oder zueinander beweglichen Wicklungsträgern angeordnet sind. Hierdurch wird es erstmals möglich, nahezu beliebige, beispielsweise auch handelsübliche Wicklungsträger zu bewickeln und nach dem vollständigen Bewickeln aller Wicklungsträger zu der vorbestimmten Ringform zu schließen. Dabei wird entgegen dem eingeschlagenen Weg im Stand der Technik, bei dem die Position der Wicklungsträger durch die Geometrie des Rotors oder des Stators vorbestimmt ist, eine räumliche Trennung beim Bewickeln ermöglicht, um so die Zugänglichkeit und damit die Durchführung der Wicklung zu optimieren. Beispielsweise können die Wicklungsträger nebeneinander positioniert werden, wobei der Abstand der Wicklungsträger im Wesentlichen der späteren, zu der Ringform geschlossenen Position an dem Stator oder Rotor entspricht. Weiterhin erfolgt das Bewickeln der durch den Wickeldraht verbundenen Wicklungsträger derart, dass dadurch zugleich die erforderliche elektrische Kontaktierung realisiert wird, ohne dass hierzu in einem nachfolgenden Arbeitsgang eine gesonderte Kontaktierung erforderlich ist. Die Wicklungsträger sind insbesondere starr, bevorzugt aus einem metallischen Werkstoff. Konkret können die Wicklungsträger T-förmige Zähne sein. Dabei können die T-förmigen Zähne jeweils an den Enden des T-Querbalkens verbindbar oder verbunden, insbesondere lösbar verbindbar sein.

Die Erfindung geht dabei von der Erkenntnis aus, dass die nach dem Stand der Technik verwendeten Rotor- oder Statorkörper die Herstellung von Wicklungen mit dem gewünschten Nutfüllfaktor nur sehr eingeschränkt ermöglichen, wohingegen erfindungsgemäß ein optimaler Nutfüllfaktor realisierbar ist, wobei die Wicklungen zudem auch bereits funktionsbereit, beispielsweise in einer Dreiecks- oder Sternschaltung, verschaltet sind. Aufgrund der fehlenden Kontaktstellen entfallen auch die in der Praxis in den Kontaktstellen auftretenden Verluste durch Übergangswiderstände. Dabei dient der Wickeldraht zugleich als eine mechanische Verbindung und bildet gleichsam ein Gelenk, um die benachbarten Wicklungsträger mit einem vorbestimmten Abstand aneinander zu fixieren.

Dabei ist es besonders vorteilhaft, wenn die Wicklungsträger zu einer Polkette verbunden sind, um so das Herstellungsverfahren zu vereinfachen. Dabei werden beim Wickeln die Wicklungsträger der Polketten mit der Wicklung versehen und anschließend zu der vorbestimmten Stator- oder Rotorform ringförmig geschlossen. Durch die Verbindung der einzelnen Wicklungsträger ist die Reihenfolge der Pole bekannt, so dass bereits die vorbestimmte Verschaltung realisiert werden kann. Dabei kann die Polkette alternativ auch durch Abtrennen einer bestimmten Anzahl von Wicklungsträgern für den entsprechenden Verwendungszweck konfektioniert werden.

In einer Gruppe von vorteilhaften Ausführungsformen der erfindungsgemäßen Wicklung erweist es sich als besonders praxisnah, wenn mehrere Wicklungsträger, insbesondere mittels eines Filmscharniers, schwenkbeweglich verbunden sind. Das Filmscharnier kann insbesondere ein Kunststoffscharnier sein. Hierdurch können die Wicklungsträger zum Bewickeln in einer gemeinsamen Ebene nebeneinander angeordnet werden. Weiterhin können die Wicklungsträger auch entgegen der späteren Ringform nach außen verschwenkt werden, um so einen maximalen Abstand zwischen den Wicklungsträgern und dadurch eine optimale Zugänglichkeit zu schaffen. Das Filmscharnier als einteilige Verbindung der Wicklungsträger beschränkt dabei die relative Beweglichkeit auf einen einzigen Freiheitsgrad und definiert zugleich den relativen Abstand der Wicklungsträger untereinander.

In einer anderen Gruppe von vorteilhaften Ausführungsformen der erfindungsgemäßen Wicklung sind mehrere Wicklungsträger reibschlüssig oder (bevorzugt) formschlüssig verbunden. Auf diese Weise kann insbesondere ein passgenauer Sitz der einzelnen Wicklungsträger zueinander in ihrer operativen Anordnung, insbesondere ein zum Einschrumpfen des Stators in einen Kühlmantel vorteilhaft präziser Außendurchmesser, erreicht werden.

Dabei weist in besonders bevorzugten Ausführungsformen ein erster Wicklungsträger eine erste Formgebung an einem Teil seiner Oberfläche und ein zweiter Wicklungsträger eine zweite Formgebung an einem Teil seiner Oberfläche auf, die zu der ersten Formgebung derart komplementär ist, dass ein Zusammenfügen der ersten und der zweiten Formgebung einen Reibschluss oder einen Formschluss bewirkt. Insbesondere können der erste und der zweite Wicklungsträger sowohl die erste Formgebung an einem Teil seiner Oberfläche als auch die zweite Formgebung an einem anderen Teil seiner Oberfläche aufweist. Konkret können die erste Formgebung eine im Wesentlichen konvexe Form und die zweite Formgebung eine im Wesentlichen konkave Form sein und eine Steckverbindungspaarung darstellen.

Die Einzeldrähte können in einer beispielhaften Ausführungsform eine kreisförmige Querschnittsform aufweisen. Besonders vorteilhaft ist es aber, wenn erfindungsgemäß die Einzeldrähte eine polygonale, insbesondere rechteckige Querschnittsform aufweisen, um so den Nutfüllfaktor weiter verbessern zu können. Ein Leiterbündel aus polygonalen Einzeldrähten weist vorteilhaft reduzierte Wirbelstromverluste auf. Außerdem ist die mechanische Verarbeitbarkeit im Wickelprozess mit dem Ziel kleinerer Wickelköpfe erleichtert.

Dabei hat es sich zudem in der Praxis bereits als besonders sinnvoll erwiesen, wenn jedes Leiterbündel aus bis zu 40 Einzeldrähten, bevorzugt 30 bis 40 Einzeldrähten, besteht, deren Durchmesser weniger als 0,5 mm, bevorzugt maximal 0,3 mm betragen kann. Bevorzugt ist der Durchmesser unter Berücksichtigung der Obergrenze möglichst groß oder maximal. In anderen Worten, der Durchmesser kann ungefähr 0,5 mm beziehungsweise ungefähr 0,3 mm betragen.

Im erfindungsgemäßen Zusammenhang steht zum einen eine elektrische Maschine mit einem Rotor oder einem Stator, der eine erfindungsgemäße Wicklung mit Merkmalen oder Merkmalskombinationen gemäß dieser Darstellung aufweist, und zum anderen die Verwendung einer erfindungsgemäßen Wicklung mit Merkmalen oder Merkmalskombinationen gemäß dieser Darstellung in einer elektrischen Maschine mit einem Rotor oder einem Stator.

Die elektrische Maschine kann insbesondere eine Synchronmaschine sein.

Die Aufgabe wird ebenfalls durch ein Verfahren zur Herstellung einer Wicklung für einen Rotor oder einen Stator einer elektrischen Maschine mit den Merkmalen des unabhängigen Anspruchs 8 gelöst.

Im erfindungsgemäße Verfahren zur Herstellung einer Wicklung für einen Rotor oder einen Stator einer elektrischen Maschine, die durch eine Vielzahl von Windungen eines Wickeldrahts hergestellt wird, besteht der Wickeldraht aus einem Leiterbündel aus einer Vielzahl von Einzeldrähten, die gegeneinander isoliert und zu einem Polygonaldraht, bevorzugt Rechteckdraht, gepresst werden. Die Wicklungsträger werden nebeneinander in einer Reihe angeordnet, anschließend wird die Wicklung auf einem jeweiligen Wicklungsträger angebracht und die Wicklungsträger werden schließlich in einer geschlossenen Ringform entsprechend der Geometrie des Rotors oder des Stators angeordnet. Hierdurch werden einerseits der Herstellungsprozess durch die nebeneinander liegende Anordnung der Wicklungsträger und die damit verbundene vergleichsweise einfache Prozesssteuerung vereinfacht, andererseits wird der Nutfüllfaktor durch die wesentlich verbesserte Zugänglichkeit optimiert.

Dabei können des Weiteren in einer Weiterbildung der Erfindung die einzelnen Wicklungsträger entsprechend ihrer Verschaltung phasenrichtig angebracht werden, so dass die Wicklungsträger lediglich zu der Ringform verbunden werden und ohne zusätzliche Verschaltungen der Wicklungsträger untereinander funktionsbereit sind.

Weiterhin erweist es sich als besonders zweckmäßig, wenn gemäß einer weiteren Ausgestaltung des erfindungsgemäßen Verfahrens die Wicklungsträger in ihrer ringförmig geschlossenen Position in ein Gehäuse eingeschrumpft werden, indem das Gehäuse beispielsweise durch Erwärmung vorübergehend eine thermische Ausdehnung erfährt, so dass die Wicklungsträger in den erweiterten Innendurchmesser eingeschoben werden können.

Die Erfindung ist in zahlreichen Ausführungsformen realisierbar. Weitere Vorteile und vorteilhafte Ausführungsformen und Weiterbildungen der Erfindung werden anhand der nachfolgenden Beschreibung unter Bezugnahme auf die Figuren dargestellt. Es zeigt im Einzelnen:
- Figur 1 -: eine Prinzipdarstellung einer Reihenanordnung von vier Wicklungsträgern,
- Figur 2: eine Wicklungsträgeranordnung in einer bevorzugten Ausführungsform der erfindungsgemäßen Wicklung,
- Figur 3: eine Ausschnittsvergrößerung der Verbindungspaarung von Wicklungsträgern in der in der Figur 2 gezeigten bevorzugten Ausführungsform, und
- Figur 4: eine alternative Ausführungsform einer Wicklungsträgeranordnung der erfindungsgemäßen Wicklung.

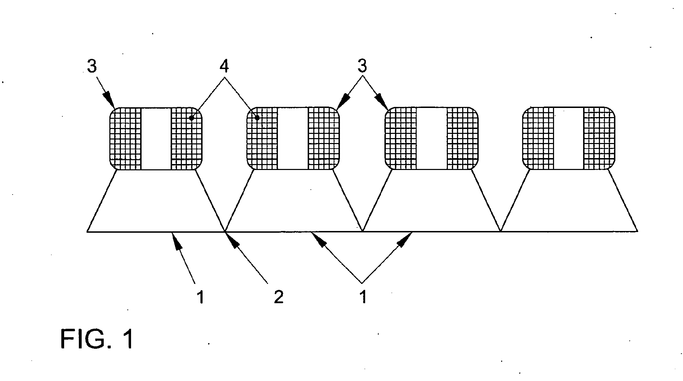

Die Figur 1 dient zur weiteren Verdeutlichung des Grundprinzips der erfindungsgemäßen Wicklung. In einer Prinzipdarstellung sind in einer Reihenanordnung beispielhaft vier einzelne Wicklungsträger 1 gezeigt, die durch ein Filmscharnier 2 verbunden sind. Auf den Wicklungsträger 1 sind bereits die Wicklungen 3 durch eine Vielzahl von Windungen eines Wickeldrahts 4 aufgebracht, wobei der Wickeldraht 4 seinerseits aus einem Leiterbündel einer Vielzahl von ca. 30 bis 40 Einzeldrähten mit einem Leitungsdurchmesser von jeweils ca. 0,3 mm besteht, die gegeneinander isoliert und zu einem Rechteckdraht gepresst sind. Zum Bewickeln sind die Wicklungsträger 1 nebeneinander in einer Reihe angeordnet, so dass diese zur Herstellung des Rotors oder des Stators lediglich in eine geschlossene Ringform gebracht und beispielsweise durch ein thermisches Schrumpfverfahren in einem nicht dargestellten Gehäuse festgelegt werden müssen. Hierdurch wird einerseits der Herstellungsprozess durch die nebeneinanderliegende Anordnung der Wicklungsträger 1 und die damit verbundene vergleichsweise einfache Prozesssteuerung vereinfacht und andererseits zugleich der Nutfüllfaktor durch die wesentlich verbesserte Zugänglichkeit optimiert.

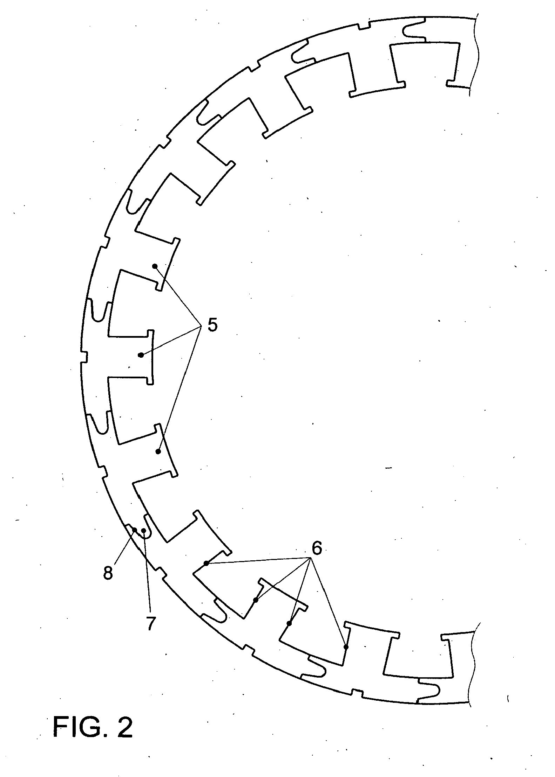

In der Figur 2 ist eine Wicklungsträgeranordnung in einer bevorzugten Ausführungsform der erfindungsgemäßen Wicklung gezeigt. Die Wicklungsträger in dieser Ausführungsform sind T-förmige Zähne 5. Zur Erhöhung der Deutlichkeit der Darstellung wird die eigentliche Wicklung auf den Hälsen 6 nicht graphisch gezeigt. Die T-Zähne 5 sind jeweils gleich ausgeführt. Die einzelnen T-Zähne 5 sind an den Enden der T-Querbalken aneinander gefügt und bilden einen geschlossenen Ring. An einem ersten Ende des T-Querbalkens weist ein T-Zahn 5 eine erste Formgebung in Form eines Vorsprungs 7 auf. Am zweiten Ende des T-Querbakens weist ein T-Zahn 5 eine zweite Formgebung in Form einer zum Vorsprung 7 im Wesentlichen komplementären Vertiefung 8 auf. Beim Fügen des Vorsprungs 7 in die Vertiefung 8 wird eine formschlüssige Verbindung geschlossen.

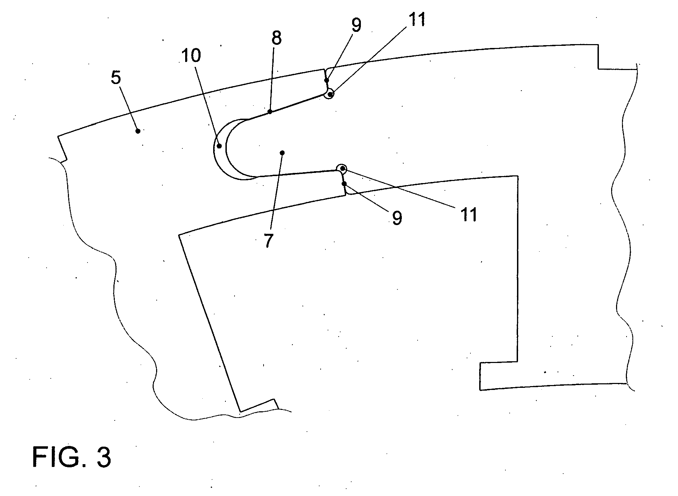

Die Figur 3 zeigt eine Ausschnittsvergrößerung der Verbindungspaarung von Wicklungsträgern in der in der Figur 2 gezeigten bevorzugten Ausführungsform. Der Vorsprung 7 des in dieser Darstellung rechts gezeigten T-Zahns 5 greift in die Vertiefung 8 des in dieser Darstellung links gezeigten T-Zahns 5 ein. Bei der erreichten Verbindung der T-Zähne 5 verbleibt ein kleiner Luftspalt 9 zwischen den Endflächen der T-Zähne, welcher den magnetischen Fluss durch die Wicklungsträgeranordnung nicht wesentlich beeinflusst oder schwächt. Zu erkennen sind des Weiteren eine Endkammer 10 und Aushöhlungen 11, welche das Schließen und gegebenenfalls auch Öffnen der formschlüssigen Verbindung erleichtern.

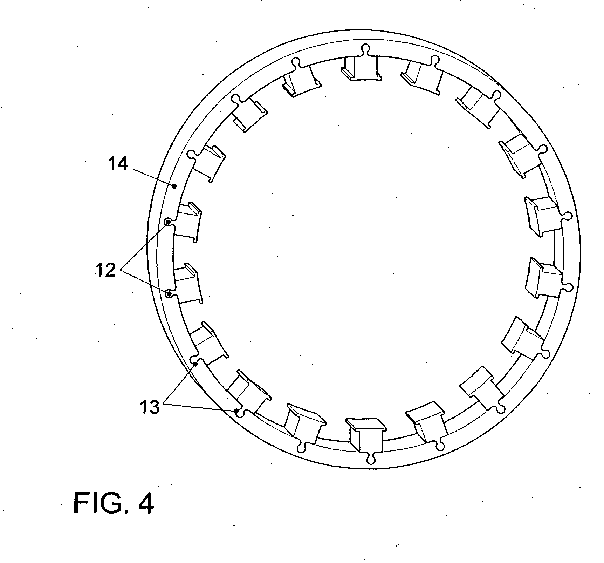

In der Figur 4 ist eine alternative Ausführungsform einer Wicklungsträgeranordnung der erfindungsgemäßen Wicklung dargestellt. Einzelne Wicklungsträger weisen Verbindungszapfen 12 auf, welche in Ausnehmungen 13 am inneren Umfang eines Ringträgerelements 14 eingreifen. Zur Erhöhung der Klarheit der Darstellung wird die eigentliche Wicklung des Wickeldrahts nicht graphisch gezeigt.

## Patentansprüche

1. Wicklung (3) für einen Rotor oder einen Stator einer elektrischen Maschine, mit einer
Vielzahl von Windungen eines Wickeldrahts (4), der durch ein Leiterbündel aus Einzeldrähten gebildet ist, die jeweils gegeneinander isoliert und zu einem Polygonaldraht
gepresst sind,
**dadurch gekennzeichnet,**
**dass** die Wicklungen (3) an einzelnen, voneinander unabhängigen oder zueinander beweglichen Wicklungsträgern (1) angeordnet sind.

2. Wicklung (3) nach Anspruch 1,
**dadurch gekennzeichnet,**
**dass** die Wicklungsträger (1) zu einer Polkette verbunden sind.

3. Wicklung (3) nach einem der Ansprüche 1 oder 2,
**dadurch gekennzeichnet,**
**dass** die Wicklungsträger (10) T-förmige Zähne (5) sind.

4. Wicklung (3) nach einem der Ansprüche 1 bis 3,
**dadurch gekennzeichnet,**
**dass** mehrere Wicklungsträger (1) schwenkbeweglich verbunden sind.

5. Wicklung (3) nach einem der Ansprüche 1 bis 3,
**dadurch gekennzeichnet,**
**dass** mehrere Wicklungsträger (1) reibschlüssig oder formschlüssig verbunden sind.

6. Wicklung (3) nach Anspruch 5,
**dadurch gekennzeichnet,**
**dass** ein erster Wicklungsträger (1) eine erste Formgebung an einem Teil seiner Oberfläche und ein zweiter Wicklungsträger (1) eine zweite Formgebung an einem Teil seiner Oberfläche aufweist, die zu der ersten Formgebung derart komplementär ist, dass ein Zusammenfügen der ersten und der zweiten Formgebung einen Reibschluss oder einen Formschluss bewirkt.

7. Wicklung (3) nach Anspruch 6,
**dadurch gekennzeichnet,**
**dass** der erste und der zweite Wicklungsträger (1) sowohl die erste Formgebung an einem Teil seiner Oberfläche als auch die zweite Formgebung an einem anderen Teil seiner Oberfläche aufweist.

8. Wicklung (3) nach Anspruch 6 oder 7,
**dadurch gekennzeichnet;**
**dass** die erste Formgebung eine im Wesentlichen konvexe Form und die zweite Formgebung eine im Wesentlichen konkave Form sind und eine Steckverbindungspaarung darstellen.

9. Wicklung (3) nach zumindest einem der vorangehenden Ansprüche,
**dadurch gekennzeichnet,**
**dass** die Einzeldrähte eine polygonale Querschnittsform aufweisen.

10. Wicklung (3) nach zumindest einem der vorangehenden Ansprüche,
**dadurch gekennzeichnet,**
**dass** das Leiterbündel aus 2 bis 40 Einzeldrähten besteht.

11. Wicklung (3) nach zumindest einem der vorangehenden Ansprüche,
**dadurch gekennzeichnet,**
**dass** jeder Einzeldraht einen Durchmesser von maximal 0,5 mm aufweist.

12. Wicklung (3) nach zumindest einem der vorangehenden Ansprüche,
**dadurch gekennzeichnet,**
**dass** die Wicklungsträger (1) als Rotor oder Stator ausgeführt sind.

13. Verfahren zur Herstellung einer Wicklung (3) für einen Rotor oder einen Stator einer elektrischen Maschine, die durch eine Vielzahl von Windungen eines Wickeldrahts (4) hergestellt wird, wobei der Wickeldraht (4) aus einem Leiterbündel aus einer Vielzahl von Einzeldrähten besteht, die gegeneinander isoliert und zu einem Rechteckdraht gepresst werden,
**dadurch gekennzeichnet,**
**dass** die Wicklungsträger (1) nebeneinander in einer Reihe angeordnet werden, anschließend die Wicklung (3) auf einem jeweiligen Wicklungsträger (1) angebracht wird und die Wicklungsträger (1) schließlich in einer geschlossenen Ringform entsprechend der Geometrie des Rotors oder des Stators angeordnet werden.

14. Verfahren nach Anspruch 13,
**dadurch gekennzeichnet,**
**dass** die einzelnen Wicklungsträger (1) entsprechend ihrer Verschaltung phasenrichtig zu der Ringform verbunden werden.

15. Verfahren nach Anspruch 13 oder 14,
**dadurch gekennzeichnet,**
**dass** die Wicklungsträger (1) in ihrer ringförmig geschlossenen Position in ein Gehäuse eingeschrumpft werden.
